# EUROPEAN PATENT APPLICATION

(11) **EP 2 267 876 A1**
(43) Date of publication of application: **29.12.2010**
(21) Application number: 10251131.8
(22) Date of filing: 23.06.2010
(51) Int. Cl.: H02M 1/32

(54) **Power converter for traction control and transportation system**

(30) Priority: 24.06.2009 JP 2009149510
(71) Applicant: Hitachi, Ltd., Chiyoda-ku Tokyo 100-8280 (JP)
(72) Inventor: Tsugawa, Dai, Tokyo 100-8220 (JP); Ishikawa, Katsumi, Tokyo 100-8220 (JP)
(74) Representative: Calderbank, Thomas Roger

(57) **Abstract**

The following problem associated with a semiconductor device of silicon or the like having low band gap is solved by temperature estimation using voltage drop in such a semiconductor device having low accuracy and this complicates a circuit for temperature detection suitable for practical use or a configuration-for implementing a detection system. A power converter provided with an inverter circuit includes a semiconductor device whose band gap is larger than that of silicon and which has a range in which the temperature coefficient of voltage drop during conduction is positive. The power converter further includes a measurement condition setting circuit. This circuit adjusts the timing of the following measurement values used for temperature estimation at a device temperature estimation circuit to each other so that a measurement value of a voltage measurement circuit and a measurement value of a current measurement circuit become data obtained by measurement at the same time.

## Description

The present invention relates to the enhancement of the reliability of a power converter, including inverters and converters, used in a motor driving device, a transportation system, or the like.

### 2. Description of the related Art

Power converters, including inverters and converters, are constructed of an electric circuit, including inverter circuits, step-up circuits, and step-down circuits, comprised of a switch, a diode, and the like. Power converters are used for direct-current or alternating-current power conversion, alternating-current frequency conversion, and the like. The power converters are widely used in switching power supplies for stepping-up/down, large-capacity motor drive systems and power systems for transmission and transformation.

As an element for converters used in the power converters, a power semiconductor element, such as a high-breakdown voltage transistor or diode, is used in large-capacity applications from the viewpoint of loss reduction.

Loss reduction is required of power semiconductors for the enhancement of the efficiency of converters. In recent years, the adoption of diodes and transistors made of compound semiconductors including SiC and GaN has made it possible to reduce the loss of power converters, including high-voltage inverters and converters.

At the same time, higher reliability is required of systems using a power semiconductor from the viewpoint of safety.

As one of means for meeting requests for higher reliability, temperature rise protectors have gone into actual use for the prevention of thermal runaway of semiconductors and destruction due to thermal runaway.

Among the conventional circuit methods for temperature rise protectors, there is a method in which the semiconductor device temperature of a diode or a transistor is estimated from the current/voltage characteristic of a p-n junction formed in them (JP-A-07-234162). In addition, there are overheat detection circuits for power supply devices using a wide-gap semiconductor diode having such a characteristic that the forward voltage is increased as the temperature rises (JP-A-2008-72863).

In temperature estimation circuits in conventional high-breakdown voltage power semiconductors using a silicon semiconductor such as described in JP-A-07-234162, the semiconductor device temperature is estimated from the built in potential during the passage of a small current in the silicon semiconductor and voltage drop during the passage of a large current.

However, there is large variation in the current/voltage characteristic of a p-n junction in power semiconductors from semiconductor device to semiconductor device. There are also semiconductor devices that exhibit a negative temperature characteristic in which voltage drop is reduced as temperature rises. To estimate temperature, therefore, it is required to separately prepare a circuit or a semiconductor device for accurately measuring voltage drop or a characteristic table corresponding to widely varying semiconductor devices or a circuit for characteristic check. This poses a problem of the complication of a system.

JP-A-2008-72863 discloses an overheat detection circuit using a wide-gap semiconductor diode so configured that a diode comprised of a wide-gap semiconductor having such a characteristic that the forward voltage is increased as the temperature rises and a voltage detection circuit for detecting the forward voltage of the diode are used, and a switching element of a power supply device is stopped by estimating temperature rise in the diode. In this configuration, voltage detection timing is not taken into account and there are cases where voltage drop due to actual diode temperature rise cannot be correctly detected.

The invention is related to, for example, a power converter including an inverter circuit. The power converter includes a semiconductor device whose band gap is larger than that of silicon and which has a range in which the temperature coefficient of voltage drop during conduction is positive.

Further, the converter includes a measurement condition setting circuit that adjusts the timing of a measurement value of a voltage measurement circuit and a measurement value of a current measurement circuit used for temperature estimation at a device temperature estimation circuit to each other so that the measurement values become data obtained at the same time.

The following are examples of more concrete configurations:
(1) A power converter including an inverter circuit, comprising:
   a semiconductor device whose band gap is larger than that of Si and which has a range in which the temperature coefficient of voltage drop during conduction is positive;
   a voltage measurement circuit that measures voltage drop between electrodes of the semiconductor device;
   a current measurement circuit that measures the output current of the inverter circuit;
   a device temperature estimation circuit that estimates the temperature of the semiconductor device from the following measurement values: a measurement value of the voltage measurement circuit when a current having such a magnitude that the temperature coefficient is positive passes through the semiconductor device and a measurement value of the current measurement circuit at that time;
   a measurement condition setting circuit that adjusts the timing of the following measurement values, used for estimation of the temperature at the device temperature estimation circuit, to each other so that the measurement value of the voltage measurement circuit and the measurement value of the current measurement circuit become data obtained by measurement at the same time; and
   a temperature rise protection circuit that controls energization of the inverter circuit based on the temperature estimated at the device temperature estimation circuit.
(2) In the description in Section (1) above, the measurement condition setting circuit may be provided with a delay circuit that delays at least either of the measurement value of the voltage measurement circuit and the measurement value of the current measurement circuit inputted to the device temperature estimation circuit..
(3) In the description in Section (1) or (2) above, the measurement condition setting circuit may be provided with a duty control circuit that ensures that the device temperature estimation circuit estimates temperature using data obtained by measurement with the timing with which the frequency of variation in the measurement value of the voltage measurement circuit is lower than a predetermined frequency and which is not in proximity to timing with which the measurement value of the voltage measurement circuit varies.
(4) In the description in any of Sections (1) to (3) above, the semiconductor device is comprised of at least one or more compound semiconductors.
(5) In the description in any of Sections (1) to (4) above, a diode connected in parallel with a switching element of the inverter circuit may be used as the semiconductor device.
(6) In the description in Section (5) above, the diode may include a Schottky barrier between its anode and cathode.
(7) In the description in any of Sections (1) to (6) above, a transistor used as a switching element of the inverter circuit may be used as the semiconductor device. Further, voltage drop between the collector and emitter electrodes of or between the drain and source electrodes of the transistor may be measured at the voltage measurement circuit.
(8) In the description in any of Section (1) to (7) above, the following may be provided:
   a smoothing capacitor connected between the positive pole and the negative pole of a direct-current power supply of the inverter circuit;
   a discharge circuit of the smoothing capacitor, provided between the positive pole and negative pole of the direct-current power supply and comprised of an impedance having a predetermined magnitude and a first shut-off switch; and
   a second shut-off switch that is provided on the positive pole side or negative pole side of the direct-current power supply and separates the inverter circuit from the direct-current power supply.
   When the temperature estimated by the device temperature estimation circuit exceeds a predetermined temperature, the temperature rise protection circuit may short-circuit the first shut-off switch and open the second shut-off switch.
(9) The invention may be configured as a motor driving device equipped with the power converter described in any of Sections (1) to (8).
(10) The invention may be configured as a transportation system equipped with the motor driving device described in Section (9) above.

According to the invention, voltage drop more largely varies at the time of temperature rise than in conventional detection methods. Therefore, temperature can be estimated easily even with a less accurate detection circuit and it is possible to provide a power converter having a temperature rise protector with simple circuitry.

As mentioned above, a measurement value of a voltage measurement circuit and a measurement value of a current measurement circuit, used for temperature estimation, are adjusted to each other so that the measurement values become data obtained at the same time. This enables accurate temperature estimation. Further, by appropriately adjusting timing with which voltage drop in a semiconductor device is measured with a voltage measurement circuit, it is possible to measure accurate voltage drop and estimate correct temperature rise corresponding thereto.

### In the drawings

FIG. 1 is a circuit diagram illustrating the basic configuration of an inverter circuit to which the invention is applied;
FIG. 2A is a characteristic diagram of a Schottky diode illustrating the principle of the invention;
FIG. 2B is a characteristic diagram of a diode in a conventional example;
FIG. 3 is a circuit diagram illustrating a first embodiment of the invention;
FIG. 4 is a circuit diagram illustrating a second embodiment of the invention;
FTG. 5 is an explanatory drawing illustrating a third embodiment of the invention;
FIG. 6 is a block diagram illustrating the configuration of a control circuit of the invention;
FIG. 7A is a waveform chart indicating measured voltage in the third embodiment of the invention;
FIG. 7B is a waveform chart indicating measured current in the third embodiment of the invention;
FIG. 8 is a circuit diagram illustrating a fourth embodiment of the invention;
FIG. 9A is a schematic diagram illustrating a mounting mode in the invention; and
FIG. 9B is a schematic diagram illustrating a mounting mode in the invention.

Hereafter, description will be given to each embodiment of the invention with reference to the drawings.

### (First Embodiment)

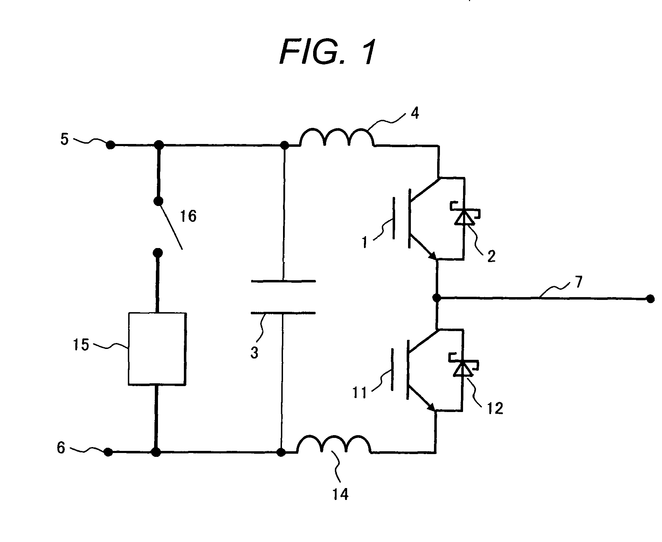

FIG. 1 illustrates the basic configuration of an inverter circuit included in a power converter to which the invention is applied. In FIG. 1, reference numeral 1 is a first switching element; 2 is a first Schottky diode; 3 is a smoothing capacitor; 4 is a positive inductance; 5 is a circuit positive terminal; 6 is a circuit negative terminal; 7 is a inverter output terminal; 11 is a second switching element; 12 is a second Schottky diode; 14 is a negative inductance; 15 is a first impedance; and 16 is a first shut-off switch.

In the inverter circuit obtained by combining the diodes 2, 12 and switching elements 1, 11 illustrated in FIG. 1, the power of the inverter output terminal 7 is controlled by complementarily switching the first switching element 1 and the second switching element 11. Power converters, such as inverters, converters, or step-up/down choppers, are formed by combining the above circuit and the smoothing capacitor 3 with the inductances 4, 14 existing in a wiring or a board.

The circuit positive terminal 5 is connected with the positive pole of a direct-current power supply and the circuit negative terminal 6 is connected with the negative pole of the direct-current power supply. In a first embodiment, a discharge circuit of the smoothing capacitor 3 is formed by combining the first impedance 15 having a predetermined magnitude with the first shut-off switch 16 connected in series with the first impedance 15.

In the example in FIG. 1, it is desirable to use a Schottky diode (SBD: Schottky barrier diode) made of a compound semiconductor having large temperature coefficient of voltage drop as the diodes 2, 12. (Examples of such compound semiconductors include a wide-band gap semiconductor of SiC, GaN, or the like.)

The inverter circuit in FIG. 1 achieves reduction of recovery current at the time of reverse recovery and reduction of recovery loss by applying a Schottky diode to the inverter circuit comprised of an ordinary switching element and a free wheeling diode.

In blocked state, meanwhile, a leakage current specific to Schottky diodes passes through the inverter circuit and the magnitude of this leakage current is determined by the voltage of the smoothing capacitor 3.

The discharge circuit is formed as a means for reducing the voltage of the smoothing capacitor 3 and the electric charges stored in the smoothing capacitor 3 are discharged to reduce voltage applied to the inverter circuit.

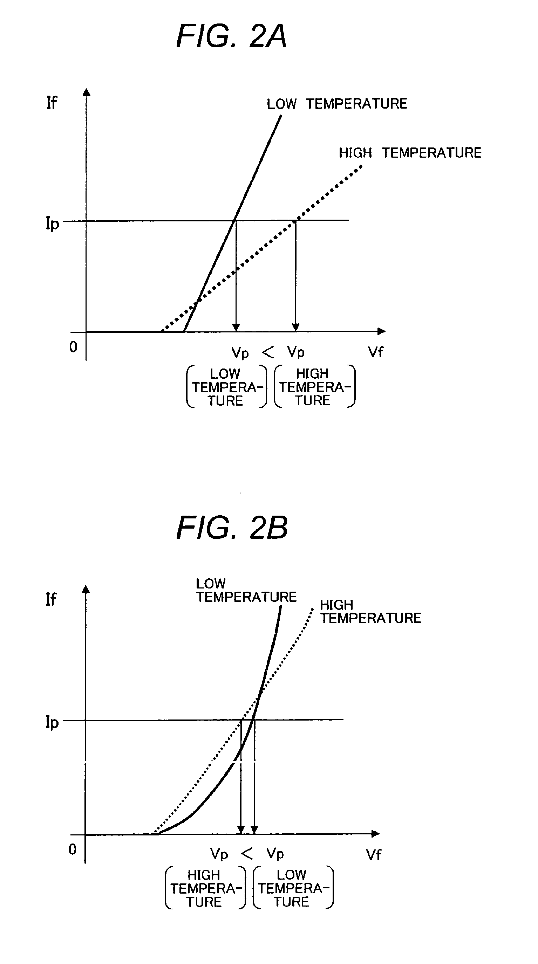

The characteristic of the Schottky diode used in the first embodiment is explained below. FIG. 2A indicates the forward characteristic of a Schottky diode of the invention and FIG. 2B indicates the forward characteristic of a conventional diode. The forward characteristic of a diode refers to the characteristic of current If and voltage drop Vf observed when a forward current is passing through the diode. In FIG. 2A and FIG. 2B, the horizontal axes are taken as voltage drop Vf and the vertical axes are taken as current If and characteristics at high temperature and those at low temperature are indicated.

For the conventional diode, a low-band gap element of Si or the like is used to achieve both the characteristics of breakdown voltage and forward voltage. As indicated in FIG. 2B, for this reason, the following range exists even when the current is a relatively large current Ip (the current is not in proximity to 0) passing in normal operation (steady state) . That is a range in which the temperature coefficient of voltage drop is negative (a range in which voltage drop Vp is reduced as the temperature rises at the current of Ip, that is, a range in which Vp (high temperature) < Vp (low temperature)).

In some of conventional temperature estimation methods in a high-breakdown voltage power semiconductor using a silicon semiconductor, device temperature is estimated from built in potential during the passage of a small current and voltage drop during the passage of a large current.

As illustrated in FIG. 2B, however, there is the point, at which the characteristic curve at high temperature and the characteristic curve at low temperature intersect with each other, in a large current range except the vicinity of built in potential, that is, a range in which a current is sufficiently flowing. In the range in which the current Ip is larger than that at the point of intersection, the temperature coefficient of voltage drop is positive and Vp (low temperature) < Vp (high temperature). In the range in which the current Ip is smaller than that at the point of intersection, the temperature coefficient of voltage drop is negative and Vp (high temperature)

### < Vp (low temperature).

Therefore; when it is assumed that the magnitude of the current Ip at the point of intersection is half of the magnitude of rated current, the positive and negative signs of the temperature coefficient of voltage drop are inverted depending on the magnitude of current. This prevents accurate temperature estimation. This point of intersection individually differs from chip to chip and it is difficult to use a diode having such a characteristic to estimate temperature.

In the first embodiment, consequently, a semiconductor device using a wide-band gap semiconductor adopting a compound semiconductor of SiC, GaN, or the like large in the temperature coefficient of voltage drop as indicated in FIG. 2A is used to carry out temperature estimation. In the example in FIG. 2A, the range in which the temperature coefficient of voltage drop during conduction is positive is wider.

When the current If is small (the current is in proximity to 0), there is a very small range in which the temperature coefficient of voltage drop is negative. However, in case of relatively large current Ip (the current is not in proximity to 0) passing in normal operation (steady state), voltage drop Vp at high temperature is larger than voltage drop Vp at low temperature. That is, the temperature coefficient of voltage drop is positive. Since voltage drop Vp largely varies when the temperature changes at current Ip, it is possible to utilize the correspondence shown in FIG. 2A to carry out more accurate temperature estimation than conventional.

In proximity to built in potential, there is a very small range in which the temperature coefficient of voltage drop is negative. However, this range is small and a current Ip having this magnitude does not pass in normal operation (in steady state or during energization) . Even if such a current passes, it only has not to be used for temperature estimation.

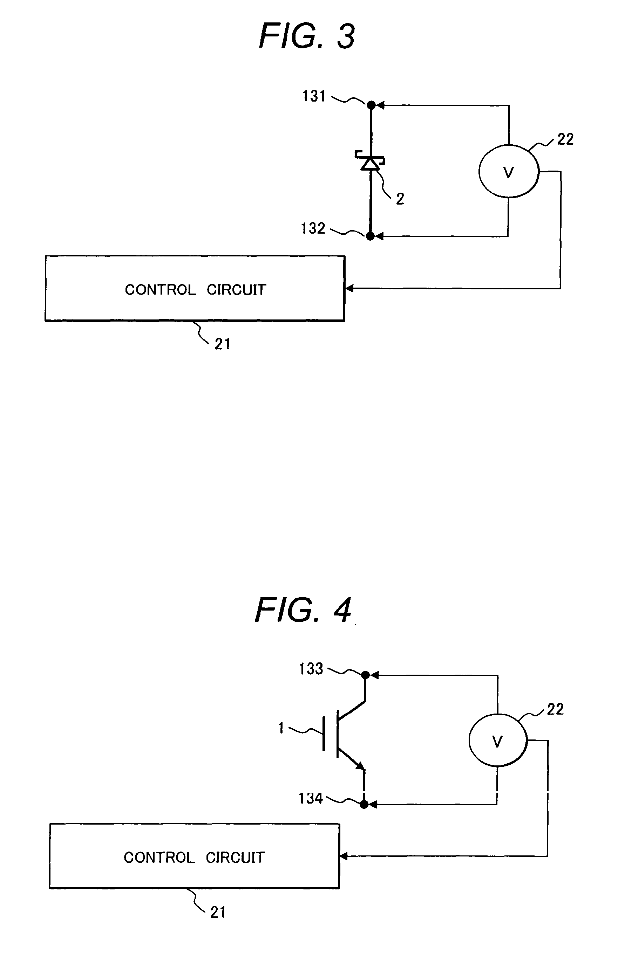

FIG. 3 illustrates the basic configuration of a temperature estimation circuit using a semiconductor device large in the temperature coefficient of voltage drop, shown by the voltage/current characteristic in FIG. 2A. FIG. 3 shows a temperature estimation circuit that uses the first Schottky diode 2 as a reflux diode and uses a voltage measurement circuit for measuring the terminal voltage of the first Schottky diode 2 and a control circuit. Reference numeral 21 is a control circuit; 22 is a voltage measurement circuit, 131 is a cathode terminal; and 132 is a anode terminal.

With use of a Schottky diode large in the temperature coefficient of voltage drop, the temperature of a semiconductor device, such as a Schottky diode, can be accurately and simply estimated by measuring the voltage drop in an inverter of the control circuit 21 relative to a current command value is measured using this temperature estimation circuit. When temperature is estimated, as mentioned above, estimation is carried out only when a current Ip having such a magnitude that the temperature coefficient is positive in FIG. 2A passes, by determining the magnitude of the current or taking the other like means.

The control circuit 21 can be comprised of a microcomputer or the like having a temperature estimating means, such as a program for computing the temperature of a semiconductor device or a lookup table, in memory. Utilizing the characteristic indicated in FIG. 2A, an estimated temperature of a semiconductor device is computed from a current command value of the inverter and a measurement value of the voltage measurement circuit. Then the operation of the inverter circuit is controlled to within an appropriate temperature range so that the upper limit temperature of the device is not exceeded.

FIG. 3 illustrates a case where the diode 2 is used. The diode 12 may be used alternatively.

### (Second Embodiment)

FIG. 4 illustrates a second embodiment of the invention. FIG.4 illustrates a temperature estimation circuit in which the first switching element 1 is used as a semiconductor device for temperature estimation. Reference numeral 133 is a collector terminal and 134 is a emitter terminal.

When the first switching element 1 is, for example, IGBT, in conventional cases with Si, the band gap is low and voltage is reduced in operation at large current. However, use of a wide-band gap semiconductor device using a compound semi conductor of SiC, GaN, or the like large in the temperature coefficient of voltage drop as in the invention increases voltage drop during conduction.

Since the temperature coefficient of voltage drop during conduction is large as compared with Si, variation in voltage between collector and emitter during gate on is increased relative to temperature change. The estimated temperature of the semiconductor device can be computed by providing this phenomenon in combination with the control circuit 21 and the voltage measurement circuit 22 as in the first embodiment. The configuration and operation of the control circuit 21 and the voltage measurement circuit 22 are the same as in the first embodiment.

The same holds true also for cases where MOSFET is used for the first switching element 1. In this case, variation in drain-source voltage during gate on is large relative to temperature change. Therefore, the above object can be achieved using the same means.

FIG. 4 illustrates a case where the switching element 1 is used. The switching element 11 may be used alternatively.

### (Third Embodiment)

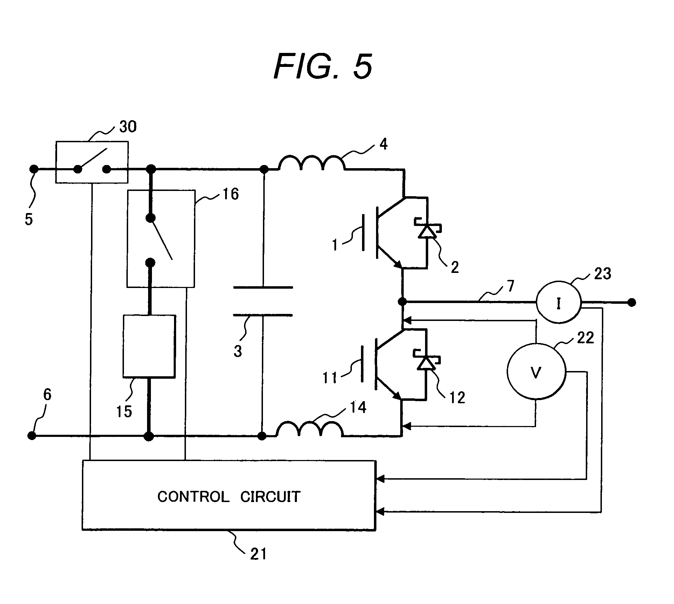

FIG. 5 illustrates a third embodiment of the invention. FIG. 5 shows an example in which the temperature estimation circuit in FIG. 3 and FIG. 4 is applied to an inverter circuit. With respect to particulars that overlap with the contents described in relation to the first and second embodiments, the description thereof will be omitted and a difference will be described below.

In FIG. 5, reference numeral 15 is a first impedance; 16 is a first shut-off switch; 21 is a control circuit; 22 is a voltage measurement circuit; 23 is a current measurement circuit; and 30 is a second shut-off switch.

In the third embodiment, the voltage measurement circuit 22 measures a potential difference between the inverter output terminal 7 and the negative pole side. For this reason, semiconductor device such as, a semiconductor device using a wide-band gap semiconductor adopting a compound semiconductor of SiC, GaN, or the like having large temperature coefficient of voltage drop, described in relation to the first and second embodiments , is used as the diodes 2, 12 or the switching elements 1, 11.

The current measurement circuit 23 measures the output current of the inverter output terminal 7. The second shut-off switch 30 is provided on the positive side or negative side of the direct-current power supply and the inverter circuit can be separated from the direct-current power supply.

The opening/closing of the first shut-off switch 16 and the second shut-off switch 30 is controlled by the control circuit 21. The control circuit 21 uses the current measurement circuit 23 and the voltage measurement circuit 22 to take in the current and voltage of the inverter output terminal 7. Then it estimates temperature rise in the semiconductor device as in the first and second embodiments and detects the state of temperature of the semiconductor device.

After the detection of the state of temperature of the semiconductor device, the temperature rise protection circuit provided in the control circuit 21 is actuated. When a predetermined temperature is exceeded, as a result, the circuit is shut off by opening the second shut-off switch 30 and electric charges in the smoothing capacitor 3 are discharged by short-circuiting the first shut-off switch 16. The temperature rise protector of the inverter circuit can be thereby implemented.

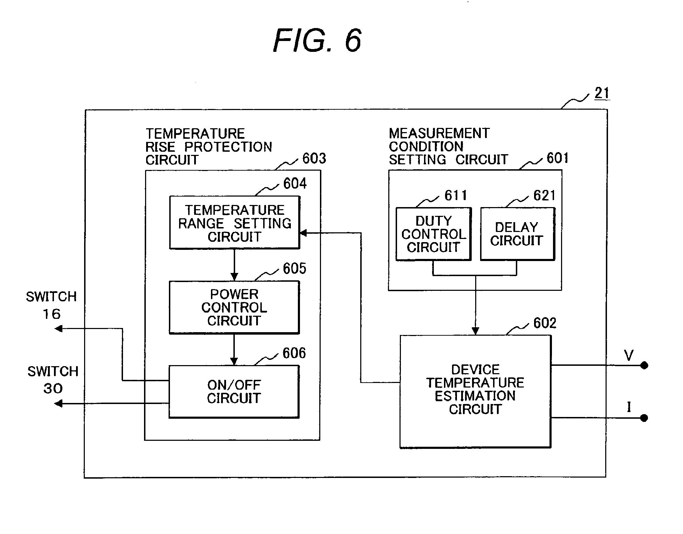

The control circuit 21 can be configured, for example, as illustrated in FIG. 6. That is, the output V of the voltage measurement circuit 22 that measures the voltage of the second Schottky diode 12 as a semiconductor device, and the output I of the current measurement circuit 23 that measures the output current of the inverter output terminal 7 are taken into a device temperature estimation circuit 602.

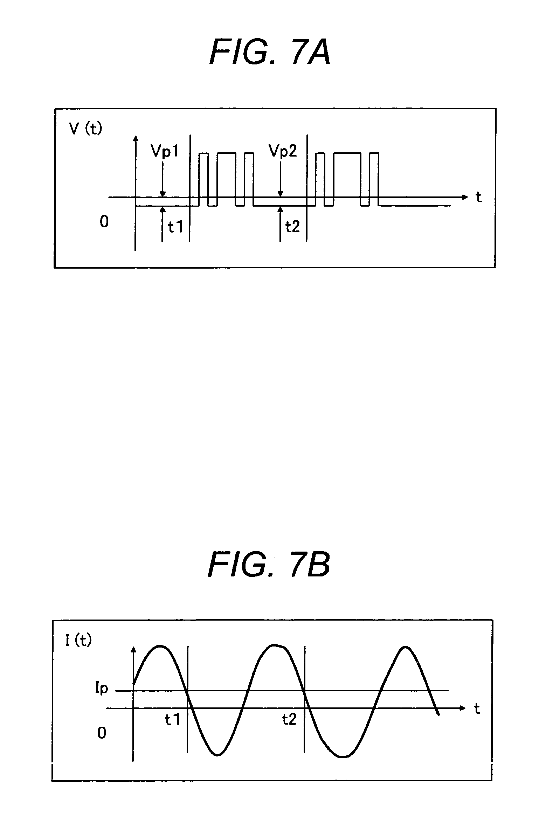

FIG. 7A and FIG. 7B indicate examples of the waveforms of output voltage and current obtained when the semiconductor devices are PWM controlled in the third embodiment of the invention. FIG. 7A indicates time variation V(t) in voltage measured by the voltage measurement circuit 22 illustrated in FIG. 5. And FIG. 7B indicates time variation I(t) in current measured by the current measurement circuit 23. In FIG. 7A and FIG. 7B, the horizontal axes indicate time t.

For example, Vp(t1) and Ip(t1) will be respectively taken as the voltage value and the current value at time t1. In case of a semiconductor device large in the temperature coefficient of voltage drop, its temperature can be accurately estimated utilizing the characteristic indicated in FIG. 2A.

However, the output V of the voltage measurement circuit 22 and the output I of the current measurement circuit 23 inputted to the device temperature estimation circuit 602 may differ in timing of input. That is, one output may be delayed from the other. In this case, the values are not data obtained by measurement at the same time and accurate temperature estimation cannot be carried out anymore. Possible reasons for shift in input timing are, for example, a time delay produced when the current measurement circuit 23 once converts current information into voltage before outputting it and the like.

To cope with this, the third embodiment is provided with a measurement condition setting circuit 601. At this circuit, a measurement value (output V) of the voltage measurement circuit 22 and a measurement value (output I) of the current measurement circuit 23 used for temperature estimation at the device temperature estimation circuit 602 are adjusted to each other so that they become data obtained by measurement at the same time.

The measurement condition setting circuit 601 includes a delay circuit 621 that delays at least either of a measurement value of the voltage measurement circuit 22 or a measurement value of the current circuit measurement circuit 23 are inputted to the device temperature estimation circuit 602. As a result, it is possible to time them to each other and carry out accurate temperature estimation.

In the third embodiment, further, the measurement condition setting circuit 601 includes a duty control circuit 611 to carry out more accurate temperature estimation. The duty control circuit 611 ensures that the device temperature estimation circuit 602 carries out temperature estimation using data obtained by measurement with the timing with which the frequency of variation in the measurement value of the voltage measurement circuit 22 is lower than a predetermined frequency and which is not in proximity to the timing with which the measurement value of the voltage measurement circuit 22 varies.

The reason why this circuit is provided is that in an inverter that operates by PWM control, there is a possibility that voltage and current are measured in some operation mode in which a current does not pass through a Schottky diode and in this case, correct voltage drop cannot be measured.

In the example in FIG. 7A, the frequency of variation in V(t) is low immediately before time t1 or time t2 and thus there is a low possibility that the value of V(t) is erroneously detected. However, the point of time slightly after time t1 or time t2 is close to the time when V(t) varies and there is a high possibility that the value of V (t) is erroneously detected. In the range subsequent thereto, the frequency of variation in V (t) becomes higher and there is similarly a high possibility that the value of V(t) is erroneously detected.

To prevent this, the duty control circuit 611 is provided and filtering is carried out so that temperature is estimated using only measurement values in a range in which accurate temperature estimation can be carried out. The third embodiment uses a method in which the potential difference in a diode produced when a certain output current flows in the forward direction of the diode is examined. At time t1, t2, or the like when a current has a certain value, the current during the passage of a current between free wheeling diode and a load is measured.

Subsequently, the device temperature estimated at the device temperature estimation circuit 602 is inputted to the temperature range setting circuit 604 in a temperature rise protection circuit 603. Then an ON/OFF circuit 606 is controlled by a power control circuit 605 so that the temperature does not get out of a proper temperature range or exceed a temperature upper limit. The first shut-off switch 16 and the second shut-off switch 30 in the inverter circuit is thereby switched to control energization of the inverter circuit. Thus temperature rise protection can be carried out by providing the temperature rise protection circuit 603 that controls energization of the inverter circuit based on the temperature estimated at the device temperature estimation circuit 602.

In the third embodiment, the effects of the invention can be obtained by measuring the potential difference between the inverter output terminal 7 and the negative pole side. However, it is apparent that the same effects can also be obtained by measuring the potential difference between the inverter output terminal 7 and the positive pole.

### (Fourth Embodiment)

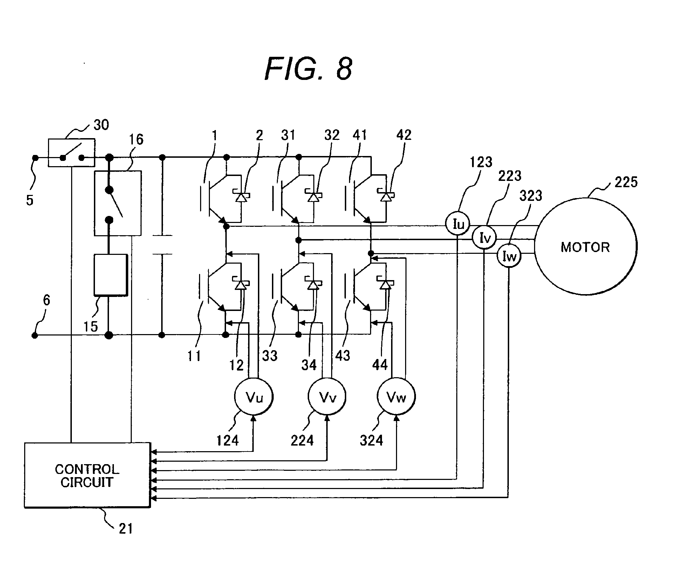

FIG. 8 illustrates a fourth embodiment of the invention. FIG. 8 shows an example of circuitry in which the inverter circuit illustrated in FIG. 5 is combined to construct a motor driving device and it is applied to a three-phase motor equipped in a transportation system. (Examples of the transportation system include vehicle, elevator, passenger conveyor, and the like.)

Reference numeral 31 is a third switching element and 32 is a third Schottky diode. 33 is a fourth switching element and 34 is a fourth Schottky diode. 41 is a fifth switching element and 42 is a fifth Schottky diode. 43 is a sixth switching element and 44 is a sixth Schottky diode.

Reference numeral 123 is a U-phase current measurement circuit and 124 is a U-phase voltage measurement circuit, 223 is a V-phase current measurement circuit and 224 is a V-phase voltage measurement circuit. 323 is a W-phase current measurement circuit and 324 is a W-phase voltage measurement circuit. 225 is a motor.

As mentioned above, in the three-phase alternating-current inverter circuit, temperature rise protection can be implemented in the inverter circuit by taking the measure that the voltage of the Schottky diode or switching element in each phase and the output current of the inverter are measured and device temperature is estimated. The details of the operation of the fourth embodiment are the same as those of the third embodiment and the description thereof will be omitted.

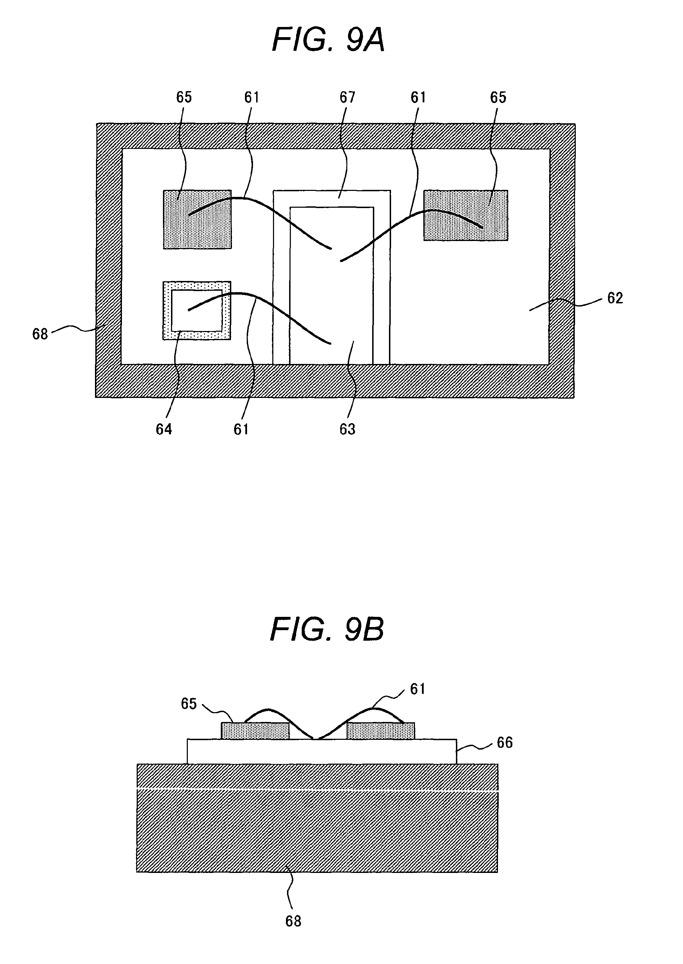

FIGS. 9A and 9B illustrate a mountingmode in the invention. FIG. 9A is a plan view illustrating an example of a device mounting mode in which an inverter circuit is implemented and FIG. 9B is a side view thereof. Reference numeral 61 is a bonding wire; 62 is a substrate positive pole portion; 63 is a substrate negative pole portion; 64 is a switching element (corresponding to the switching element 11 in FIG. 5, for example); 65 is a diode element (corresponding to the diode 12 in FIG. 5, for example); 66 is a insulating substrate; 67 is a insulating portion; and 68 is a base substrate.

A circuit system for power converters, such as DC/DC converters and inverters, can be provided by using a package assembled by combining a cooling means for radiating heat from the base substrate 68 with a substrate mounted with a semiconductor device such as a switching element and a diode element. The semiconductor device described with reference to FIG. 2A is used for at least either the switching element 64 or the diode element 65 and the voltage between the substrate positive pole portion 62 and the substrate negative pole portion 63 is measured.

Loss reduction and high-temperature operation, as well as temperature estimation, can be achieved by optimizing the compound semiconductor device used in the invention. The power converters for railway rolling stock such as trains adopting these embodiments can be reduced in size. The power converters for hybrid vehicles and electric vehicles can be operated even in an environment at high ambient temperature.

Ideas that do not depart from the above-mentioned embodiments and ideas obtained by combining these embodiments can be easily conceived from the invention. In the description of the embodiments of the invention, two-level inverters have been taken as examples of power converters. However, the power converter of the invention is also applicable to different power converters, such as multilevel inverters or converters having three or more voltage levels or DC-DC converters. The embodiments of the invention are just part of publicly known power converters.

The invention can be applied to various technical fields including: home electric appliances, power supply devices, motor driving devices, transportation systems (for example, vehicles such as rolling stock and automobiles, elevators, passenger conveyors, and the like), steel production, electricity production, and the like.

## Claims

1. A power converter including an inverter circuit, comprising:
a semiconductor device larger in band gap than Si and having a range in which the temperature coefficient of voltage drop during conduction is positive;
a voltage measurement circuit measuring voltage drop between the electrodes of the semiconductor device;
a current measurement circuit measuring the output current of the inverter circuit;
a device temperature estimation circuit estimating the temperature of the semiconductor device from a measurement value of the voltage measurement circuit when a current having such a magnitude that the temperature coefficient is positive passes through the semiconductor device and a measurement value of the current measurement circuit at that time;
a measurement condition setting circuit timing a measurement value of the voltage measurement circuit and a measurement value of the current measurement circuit, used for estimation of the temperature at the device temperature estimation circuit, to each other so that the measurement values become data obtained by measurement at the same time; and
a temperature rise protection circuit controlling energization of the inverter circuit based on the temperature estimated at the device temperature estimation circuit.

2. The power converter according to claim 1, wherein the measurement condition setting circuit includes a delay circuit which delays at least either of a measurement value of the voltage measurement circuit and a measurement value of the current measurement circuit, inputted to the device temperature estimation circuit.

3. The power converter according to claim 1, wherein the measurement condition setting circuit includes a duty control circuit which ensures that the device temperature estimation circuit estimates temperature using data obtained by carrying out measurement with timing with which the frequency of variation in the measurement value of the voltage measurement circuit is lower than a predetermined frequency and which is not in proximity to the timing of variation in the measurement value of the voltage measurement circuit.

4. The power converter according to claim 1, wherein the semiconductor device is comprised of at least one or more compound semiconductors.

5. The power converter of Claim 1,
wherein a diode connected in parallel with a switching element of the inverter circuit is used as the semiconductor device.

6. The power converter according to claim 5, wherein the diode has a Schottky barrier between the anode and cathode thereof.

7. The power converter according to claim 1, wherein a transistor used as a switching element of the inverter circuit is used as the semiconductor device and voltage drop between the collector and emitter electrodes of or the drain and source electrodes of the transistor is measured at the voltage measurement circuit.

8. The power converter according to claim 1, comprising:
a smoothing capacitor connected between the positive pole and negative pole of a direct-current power supply of the inverter circuit;
a discharge circuit of the smoothing capacitor provided between the positive pole and negative pole of the direct-current power supply and comprised of an impedance having a predetermined magnitude and a first shut-off switch; and
a second shut-off switch provided on the positive pole side or negative pole side of the direct-current power supply and separating the inverter circuit from the direct-current power supply,
wherein when the temperature estimated by the device temperature estimation circuit exceeds a predetermined temperature, the temperature rise protection circuit short-circuits the first shut-off switch and opens the second shut-off switch.

9. A motor driving device comprising the power converter according to claim 1.

10. A transportation system comprising the motor driving device according to claim 9.
